# EUROPÄISCHE PATENTSCHRIFT

(11) **EP 1 311 408 B1**
(45) Veröffentlichungstag und Bekanntmachung des Hinweises auf die Patenterteilung: **07.05.2008**
(21) Anmeldenummer: 01957676.8
(22) Anmeldetag: 15.08.2001
(51) Int. Cl.: B60P 7/08

(54) **SPANN- UND ENTSPANNELEMENT**
TENSIONING AND RELAXING ELEMENT
ELEMENT TENDEUR ET DE RELACHEMENT

(30) Priorität: 18.08.2000 CH 160900
(43) Veröffentlichungstag der Anmeldung: 21.05.2003
(73) Patentinhaber: SUXHESS Hess Board & Process Consulting, 6300 Zug (CH)
(72) Erfinder: HESS, Ruedi, CH-5306 Tegerfelden (CH); ROTT, Erwin, CH-8603 Rüti (CH)
(74) Vertreter: Becker, Konrad
(86) Internationale Anmeldenummer: PCT/CH2001/000500
(87) Internationale Veröffentlichungsnummer: WO 2002/014105

(56) Entgegenhaltungen:
- EP-A- 0 331 490
- DE-C- 178 078
- US-A- 4 657 125
- US-A- 5 692 269

## Beschreibung

Die vorliegende Erfindung betrifft Spann- und Entspannelemente für ein Zurrgut gemäss Patentanspruchs 1.

Bekannte Spannelemente und Entspannelemente werden vielfach in Spannratschen verwendet. Nach der gattungsbildenden EP-A-0455085 ist eine Spannratsche bekannt, die erlaubt, ein Rückdreh-Sicherungsgesperre schrittweise durch Hin- und Herbewegen eines Spannhebels zu lösen.
Bei den bekannten Spannratschen sind die beiden Sperrschieber des Rückdrehsicherungsgesperres am Grundkörper der Spannratsche neben der Aufwickelwelle übereinander angeordnet. Zur Verringerung der Bauhöhe der Ratsche ist weiterhin bekannt, die Sperrschieber der Gesperre gekrümmt auszuführen.
Nach der EP-A1-0736698 ist bekannt, Spannratschen so zu gestalten, daß die beiden Sperrschieber bezogen auf das Sperrad einander diametral gegenüberliegend angeordnet sind und dass die Verschieberichtung der Sperrschieber mit der Mittellängsrichtung des Ratschengrundkörpers im wesentlichen kongruent ist.

Nachteilig an diesen Spann-/Entspannelementen ist, dass alle nach dem Prinzip der Verhakung der Schieber in formschlüssige gezahnte, gelochte Räderarbeiten. Deshalb können derartige Spann-/Entspannelemente nur stufenmässig (Zahn-Lochgrösse, Abstand) bewegt werden. Die Spannung und vor allem auch die Entspannung findet in der Regel mit einer ruckartigen Hebelbewegung durch hin und her bewegen statt. Diese ruckartigen Bewegungen beim Entspannvorgang sind mit hohen mechanischen Belastungen für das Sperrad verbunden.

Aufgabe der Erfindung ist es, Spann- und Entspannelemente zu beschreiben, bei denen die Spannung, bzw. die Entspannung stufenlos und variabel erfolgt.

Erfindungsgemäss wird diese Aufgabe mit Spann- und Entspannelementen gemäss dem Wortlaut des Patentanspruches 1 gelöst. Die Erfindung wird im Folgenden anhand der Zeichnungen näher erläutert. Es zeigen:
- Fig. 1A: Schematische Darstellung eines Entspannelementes in Draufsicht
- Fig. 1B: Seitenansicht zu Fig. 1A
- Fig. 2A: Schematische Darstellung eines Spannelementes in Draufsicht
- Fig. 2B: Seitenansicht zu Fig. 2A
- Fig. 3: Kombination von Spann- und Entspannelementen in einer Spannratsche in Draufsicht
- Fig. 4: Erstes Ausführungsbeispiel für die Verwendung von Spann- und Entspannelementen in einer Ratsche
- Fig. 5: Ausführungsbeispiel eines Entspannelementes in einem Abseil- oder Lastabsenkgerät
- Fig. 6: Ausführungsbeispiel eines Spann- und Entspannelementes in der Orthopädie
- Fig. 7: Ausführungsbeispiel eines Spann- und Entspannelementes in Bindungen für Ski und Snowboards

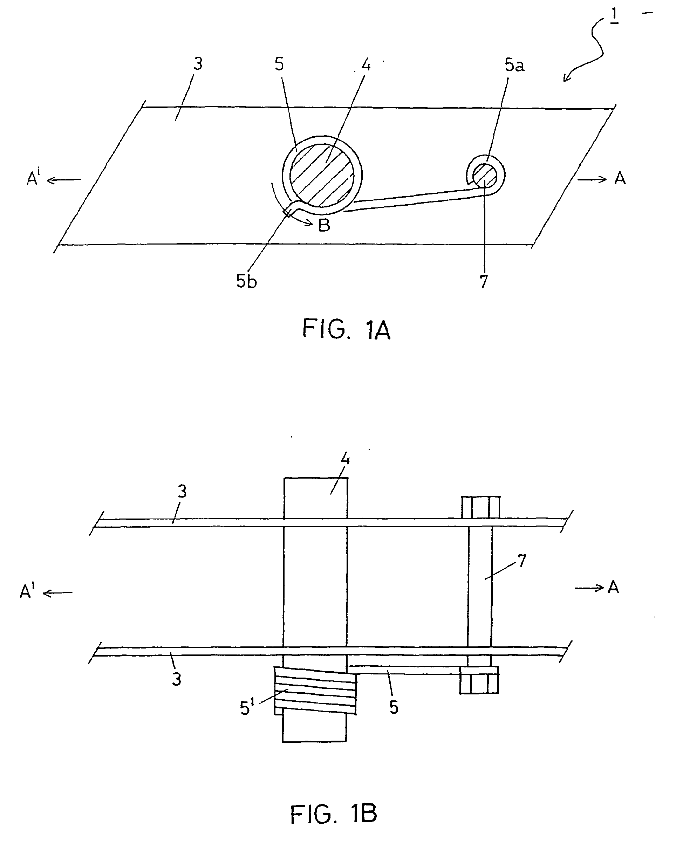

Fig. 1A und 1B zeigen schematisch ein erfindungsgemässes Entspannelement in Draufsicht, bzw. Seitenansicht.

Ein Grundkörper 3 weist eine darin gelagerte Welle 4 auf, an der ein erstes Ende eines Zurrgutes für die Zugrichtung A aufgewickelbar oder kraftschlüssig transportierbar ist, während das andere zweite Ende des Zurrgutes für die Zugrichtung A' am Grundkörper 3 selbst befestigt ist (nicht dargestellt).
Auf der Welle 4 befindet sich ein Entspannelement 5, das als Feder mit mindestens einer Federwindung 5' ausgebildet ist. Das eine Ende 5a der Feder ist auf einer am Grundkörper 3 befindlichen zweiten Welle 7 befestigt, während das andere Ende 5b der Feder senkrecht zur Tangente der Federwindung 5'umgebogen vorliegt. Das Ende 5b ist für die Aufnahme der Bedienungselemente des Entspannelementes vorgesehen, die beispielsweise im Form eines Drehknopfes oder eines Kipphebels vorliegen können.

Die eng auf der Welle 4 aufliegende Feder 5 ist so dimensioniert, dass sie diese blockiert, was bei einer gegebenen Spannkraft durch die Anzahl der gewählten Federwindungen 5', deren Auflagefläche auf der Welle, durch den Querschnitt der Windungen sowie die Materialeigenschaften des Federmaterials gegeben ist. Andererseits ist bei einer grösser vorgegebenen Spannkraft die Anordnung der Feder nicht auf eine einzelne Feder beschränkt. Eine besonders vorteilhafte Ausführungsform weist beispielsweise auf der Welle 4 zwei Entspannelemente 5 auf, die symmetrisch bezüglich einer senkrecht durch die Welle laufenden Ebene angeordnet sind. Damit verhalten sich die beiden Elemente wie Bild und Spiegelbild.
Im gespannten Zustand liegt das Zurrgut in den Zugrichtungen A - A' mit einer Spannkraft vor, die durch die Feder 5 blockiert wird, was auf dem bekannten Seilreibungsprinzip beruht, bei welchem die Reibungsbeiwerte der Welle und der Auflagefläche der Feder massgebend sind.
Um eine hohe Reibung zu erzielen, weist die Federwindung vorteilhafterweise einen quadratischen oder rechteckigen Querschnitt auf. Wesentlich ist, dass zumindest die Auflagefläche der Federwindung eine möglichst plane Fläche zur Kontaktierung der Welle 4 aufweist.
Wird nun die Feder 5 über ein Bedienungselement in Pfeilrichtung B sukzessive gelöst, so kann das Zurrgut stufenlos und variabel entspannt werden.
Vorteilhaft ist die materialsparende und einfach zu fertigende Ausführungsform dieses stufenlos lösbaren Entspannelementes.
Ein derartiges Entspannelement kann an jede heute bekannte Ratsche oder ähnliche Vorrichtung angebracht werden. Es kann für neue Bauformen von Grundkörpern, Ratschen und Wellen, resp. Auf- und Abwickelelemente im oder neben dem Grundkörper bzw. beidseitig von vorliegenden Sperrädern, versetzt auf den Wickelachsen oder auf einer separaten Achse gelagert werden.

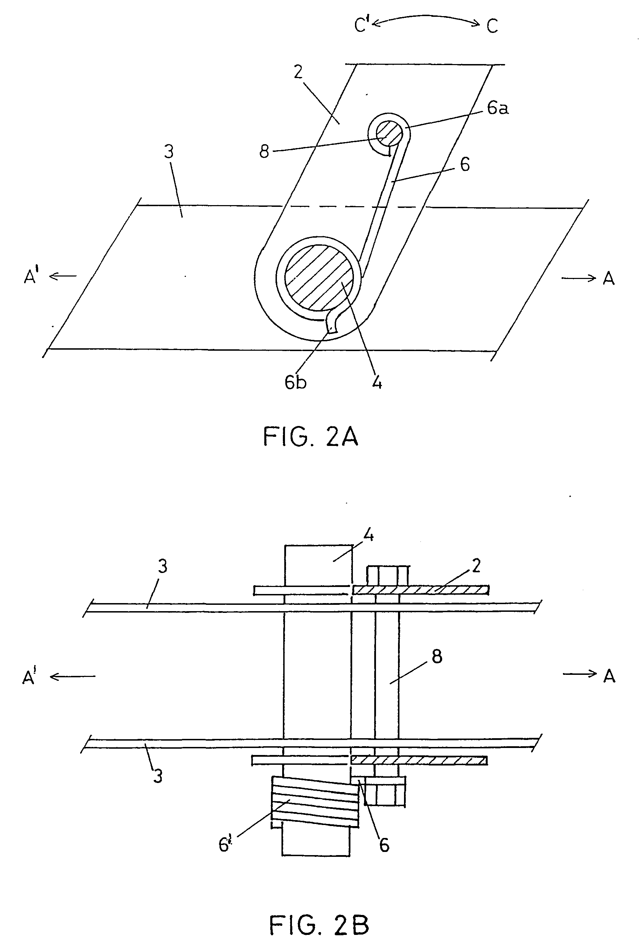

Fig. 2A und 2B zeigen schematisch ein erfindungsgemässes Spannelement in Draufsicht, bzw. Seitenansicht.

Ein Grundkörper 3 weist eine darin gelagerte Welle 4 auf, an der ein erstes Ende eines Zurrgutes für die Zugrichtung A aufgewickelbar oder kraftschlüssig transportierbar ist, während das andere zweite Ende des Zurrgutes für die Zugrichtung A' am Grundkörper 3 selbst befestigt ist (nicht dargestellt). Auf der Welle 4 befindet sich das Spannelement 6, das als Feder mit mindestens einer Federwindung 6' ausgebildet ist. Das eine Ende 6a der Feder ist auf einem zum Grundkörper 3 beweglich, ebenfalls an der Welle 4 gelagerten, Teil 2 befindlichen dritten Welle 8 befestigt, während das andere Ende 6b der Feder senkrecht zur Tangente der Federwindung 6' umgebogen vorliegt. Das Ende 6b ist für die Aufnahme der Bedienungselemente des Spannelementes vorgesehen, die beispielsweise im Form eines Drehknopfes oder eines Kipphebels vorliegen können. Die eng auf der Welle 4 aufliegende Feder 6 ist so dimensioniert, dass sie diese blockiert, was bei einer gegebenen Spannkraft durch die Anzahl der gewählten Federwindungen 6' sowie deren Auflagefläche auf der Welle gegeben ist. Andererseits ist bei einer grösser vorgegebenen Spannkraft die Anordnung der Feder nicht auf eine einzelne Feder beschränkt. Eine besonders vorteilhafte Ausführungsform weist beispielsweise auf der Welle 4 zwei Spannelemente 6 auf, die symmetrisch angeordnet sind.
Im entspannten Zustand liegt das Zurrgut in den Zugrichtungen A - A' ausgerichtet in einer losen Form vor. Die Feder 6 blockiert die Welle 4, was wiederum auf dem bekannten Seilreibungsprinzip beruht.
Wird nun das bewegliche Teil 2 in Pfeilrichtung C' bewegt, so wird das Zurrgut gespannt, falls dieses auf der oberen Seite der Welle geführt wird. Durch diese Bewegung schliesst sich die Feder, d.h. die Federwindungen 'blockieren' die Welle 4. Die Bewegung in Pfeilrichtung C bewirkt die Lösung der Feder, sodass mit dem beweglichen Teil 2 wieder für einen nächsten Spannvorgang angeholt werden kann.

Hiermit wird die Ähnlichkeit von Spann- und Entspannelement erkennbar. In der Bauart im wesentlichen gleich unterscheiden sich die beiden Elemente in ihrer Funktion, indem die einen Enden 5a, resp. 6a der Federn an verschiedenen Punkten befestigt sind, nämlich beim Entspannelement 5 am Grundkörper 3, resp. beim Spannelement 6 am beweglichen Teil 2.
Vorteilhaft ist wiederum die materialsparende und einfach zu fertigende Ausführungsform dieses stufenlos bedienbaren Spannelementes. Ein derartiges Spannelement kann an jede heute bekannte Ratsche oder ähnliche Vorrichtung angebracht werden.

Für die Federn kommen übliche Federstähle, Aluminium, Alu-Legierungen, aber auch Verbundwerkstoffe, wie etwa carbonfaserverstärkte Kunststoffe (CFK) zur Anwendung. Für die Faserwicklungen sind dies Hochleistungs-Textilfasern, Stahlfasern, daraus gedrehte Stahlseile, Aramid und dergleichen.

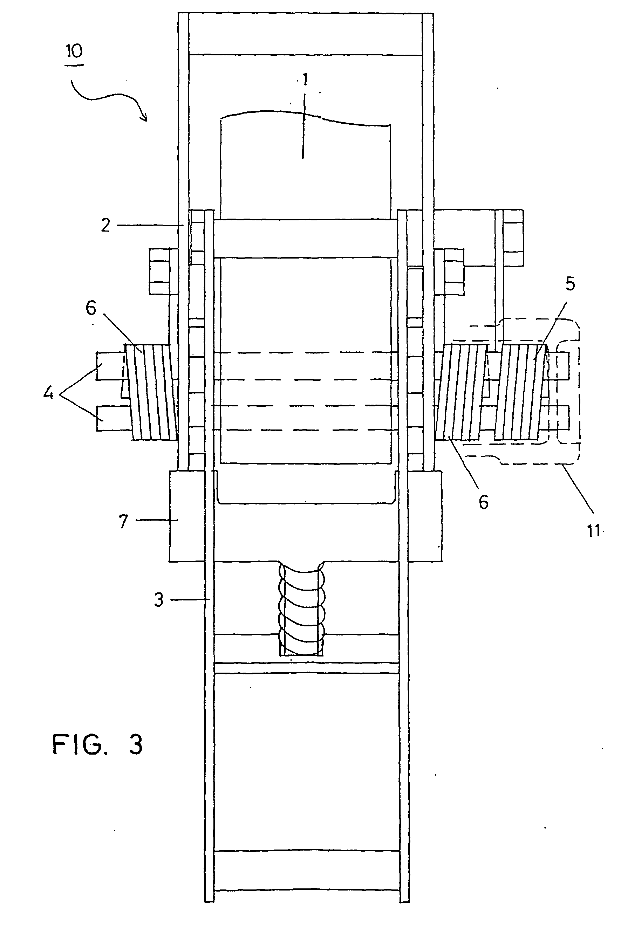

Fig. 3 zeigt eine Kombination der erfindungsmässigen Entspann- und Spannelemente 5, 6 an- und aufgebaut an einer bekannten Ratsche 10. Ein Zurrstrang 1 wird durch die bekannte Form des Aufwickel- oder Abwickelmechanismus auf der Welle 4 gelagert in einem Grundkörper 3. Die Welle 4 weist einen Schlitz 4' für die Aufnahme des Zurrstranges 1 auf, der hier das Zurrgut bildet.

Auf der Welle 4 befinden sich zwei Spannelemente 6, die hier symmetrisch zur Mittenebene der Ratsche 10 angeordnet sind. Das bewegliche Teil 2 ist als Spannhebel ausgebildet. Im Grundkörper 3 ist eine übliche Sicherungsverriegelung 7 angebracht. Auf der einen Seite der Welle 4 ist ein Entspannelement 5 angebracht, das einen Drehknopf 11 als Bedienungselement des Entspannelementes 5 vorweist.
Mit dieser Kombination von Entspann- und Spannelementen 5, 6 kann das Zurrgut stufenlos auf- und abgewickelt werden. Nach dem stufenlosen Aufwickeln mit dem Spannelement 6 wird der Auf- und Abwickelmechanismus mittels einer Sicherheitsverriegelung 7 gesichert, resp. verriegelt. Zum Abwickeln wird die Sicherheitsverriegelung entriegelt und der Zurrstrang 1 stufenlos mit dem Entspannelement 5 abgewickelt, bzw. entspannt.
Dadurch ergibt sich eine materialsparende und einfach zu fertigende Ausführungsform der stufenlos arbeitenden Spann-/Entspannelemente 5, 6, mit welchen der Zurrstrang einfach und effizient spannbar, bzw. entspannbar ist. Die Spann-/Entspannelemente können als Zusatz zu den bekannten verzahnten Räder und Stangen oder als Einzelelemente für die stufenlose Spannung des Zurrstranges eingesetzt werden.

An Stelle einer Feder kann auch eine Faserwicklung zur Anwendung gelangen, die aus mindestens einer Faserwindung besteht. Dabei wird wiederum das Seilreibungsprinzip benutzt, bei welchem die Reibungsbeiwerte der Welle und der Auflagefläche der Faserwicklung massgebend sind.

Spann- und Entspannelemente 5, 6 können aber auch mit neuen Grundkörperformen und Auf- oder Abwickelkonstruktionen eingesetzt werden. Sie können deshalb z.T. als Zusatz platzsparend und sehr leichtgewichtig angebracht oder als integrierende Elemente verwendet werden. Die auf verschiedenen Grundkörpern beruhenden Auf- und Abwickelelemente, als auch die bekannten Ratschen, ausgerüstet mit den Spann-/Entspannelementen sind durch den günstigen Aufbau der Spann-/Entspannelemente leichtgewichtig und platzsparend, und sehr einfach in der Handhabung.

Anhand von verschiedenen Ausführungsbeispielen wird die Erfindung weitergehend erläutert.

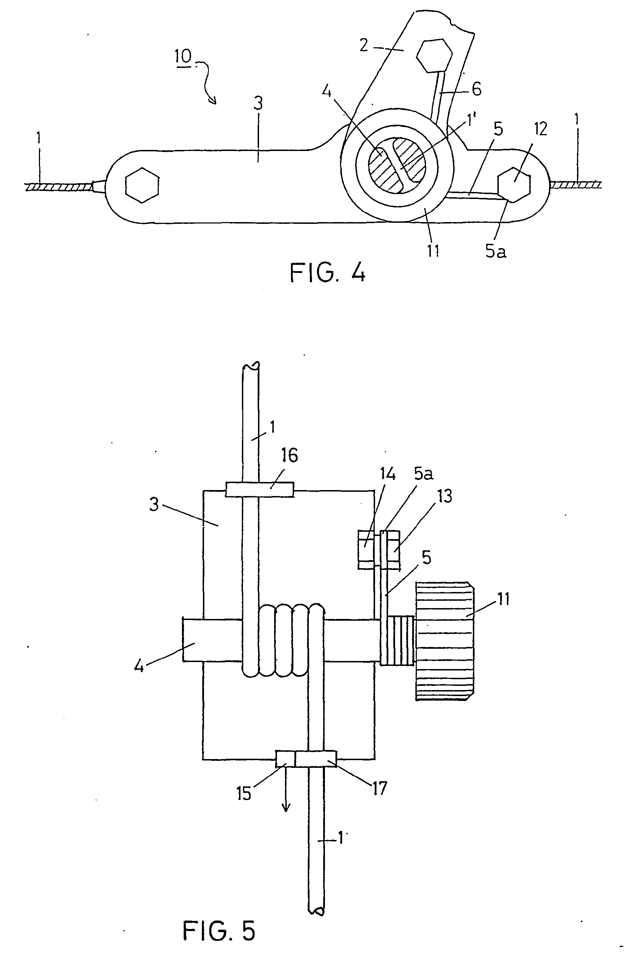

Fig. 4 zeigt ein erstes Ausführungsbeispiel für die Verwendung von Spann- und Entspannelementen in einer Ratsche.
In einer Ratsche 10 (Typ 4000/5000) sind der Grundkörper 3, das bewegliche Teil 2, der Zurrstrang 1 und die Welle 4 erkennbar, die der Fig. 3 entsprechen. Nachdem die Wellenlänge und die Länge einer Schraube der bekannten Ratsche geändert wurden, wurden die Spann- und Entspannelemente 5, 6 auf der Welle 4 montiert, indem das Spannelement 6 am beweglichen Teil 2, dem Spannhebel, anliegend montiert wurde, während das Entspannelement 5 aussenliegend auf der Welle 4 und mit dem einen Ende auf der verlängerten Schraube mit Abschlussmutter 12 montiert wurde. Das eine Ende 1' des Zurrstranges wurde um die Welle 4 gelegt, die hier als Auf- und Abwickelwelle ausgebildet ist. Das andere Ende des Zurrstranges ist in bekannter Weise am Grundkörper 3 befestigt. Das Entspannelement 5 ist hier mit einem Drehknopf 11 für die Betätigung des Entspannvorganges versehen, der nach Lösen der Sicherung durch Andrücken oder Drehen mit geringem Kraftaufwand ein stufenloses Entspannen des Zurrstranges 1 bewirkt.
Hieraus ergibt sich ein konstruktiv einfacher und fertigungstechnisch günstiger Aufbau der Spann-/Entspannelemente durch Anbringen als Zusatzelemente an bekannte Spannratschengrundkörper. Einerseits ist das Festende des Zurrstrangs leicht an der Welle fixierbar und andererseits können die Aufwickelwelle 4 und andere Teile leicht verlängert werden, sodass die Spann-/Entspannelemente einfach am Grundkörper, bzw. am beweglichen Teil montierbar sind.
Ausserdem ist die ähnliche Bauweise dieser Elemente vorteilhaft, da die wenigen Teile als Gleichteile verbaut werden können, was die Fertigungskosten günstig beeinflusst.

Fig. 5 zeigt ein Ausführungsbeispiel eines Entspannelementes in einem Abseil- oder Lastabsenkgerät.
Eine Welle 4 befindet sich gelagert in einem Grundkörper 3, der gleichzeitig als Gehäuse ausgebildet ist. Am einen Ende der Welle 4 weist diese ein Entspannelement 5, das als Feder ausgebildet mit dem einen Ende 5a am Gehäuse 3 mittels Schraube 13 und Mutter 14 befestigt ist. Als Bedienungselement dient ein gerändelter Drehknopf 11. An der Stelle 15 des Gehäuses ist die Last mit einem üblichen Haken angebracht, was mit einem Pfeil angedeutet ist. Ein Seil 1 wird durch eine obere Öffnung 16 in das Gehäuse geführt, umschlingt die Welle 4 vier oder fünf Mal und verlässt das Gehäuse durch eine untere Öffnung 17. Als Seil 1 kommen auch Bänder aus Kunststoff, Metall, Textilfasern oder ähnliche Materialien wie Aramid, Carbon in Frage. Das Gerät erlaubt eine stufenlose und regulierbare Absenkung einer Last bei einer einfachen Handhabung und dies praktisch unabhängig von den Umgebungsbedingungen wie Feuchtigkeit, Wasser, Öl, Trockenheit und Hitze. Die Absenkung findet mittels einem Drehknopf, oder einem ähnlichen Element, statt mit einem geringen Kraftaufwand. Bei Panik oder Loslassen des Knopfes bewirkt das Entspannelement sofort einen Stillstand der Absenklast, was aus sicherheitstechnischer Sicht sehr vorteilhaft ist.

Selbstverständlich kann das Gerät auch zusätzlich mit einem Spannelement ausgerüstet werden, wobei die Aufzugskraft mittels Hebel, Rad oder einem ähnlichen Element aufgebaut wird (nicht dargestellt). Eine Verriegelung findet, falls notwendig, formschlüssig statt. Die Konstruktion zeichnet sich durch eine flache, wenig Bauteile umfassende Bauweise aus, die gewichtssparend, stufenlos regulierbar und bedienungsfreundlich ist.

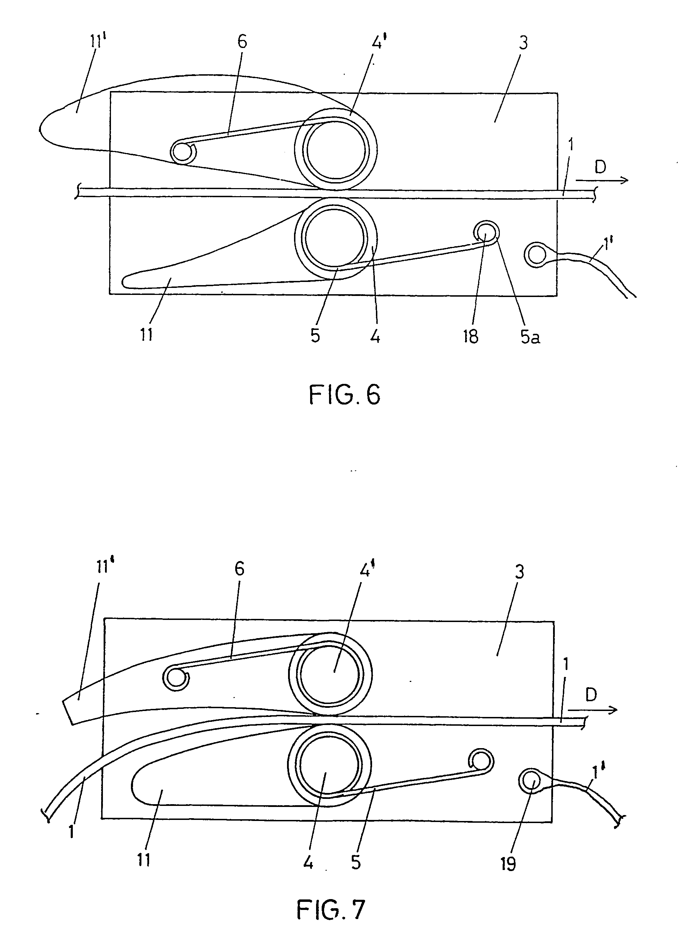

Fig. 6 zeigt ein Ausführungsbeispiel eines Spann- und Entspannelementes in der Orthopädie im Schnitt dargestellt.
Im orthopädischen und Rehabilitationsbereich werden vielfach Schienen mit Bandagen verwendet, die mit Klettverschlüssen befestigt werden. So werden beispielsweise bei Knieschienen die obere Hälfte des Stützgerätes am Oberschenkel befestigt. Bedingt durch den Muskelschwund oder durch die Muskelarbeit wird ein Nachstellen, bzw. Engerstellen der Bandage häufig notwendig, um einen gleichbleibenden Halt zu gewähren. Obwohl dies an sich mit einem Klettverschluss einfach zu bewerkstelligen ist, fehlt bei diesem in der Regel eine Referenzmarke. Damit ist es schwierig bis unmöglich, nach dem Öffnen diesen Verschluss wieder an den gleichen Stelle zu befestigen, bzw. zu schliessen. Dies hat einen wiederkehrenden Tragekomfortnachteil.

In einem Grundkörper 3 befindet sich gelagert eine erste Welle 4 mit einem Entspannelement 5 in Federform, dessen eines Ende 5a am Grundkörper 3 mittels einer Schraube 18 befestigt ist. Auf der Welle 4 ist, das Entspannelement 5 umfassend und abdeckend, ein Bedienungselement in der Form eines Hebels 11 angebracht, der durch seine Formgebung zu keinerlei Verletzungsmöglichkeiten Anlass gibt. Das Zurrgut, hier als Zurrband 1 ausgebildet, wird über die Welle 4 geführt, liegt auf dieser auf und erfährt durch eine zweite Welle 4', die sich über der ersten Welle 4 im Grundkörper 3 gelagert befindet, einen Gegendruck. Das Zurrband 1' ist am Grundkörper 3 befestigt und bildet den Gegenpart. Die Spannrichtung ist mit einem Pfeil D angedeutet. Das Zurrband wird nicht mehr auf der Welle 4 aufgewickelt, sondern lediglich auf dieser vorbeigeführt. Hierfür ist die Welle 4 aufgerauht, bzw. geriffelt ausgeführt und das Zurrband kann mit einer Kunsststoff-Beschichtung versehen sein, um höhere Reibwerte zu erzielen. Auf der Welle 4' befindet sich ein Spannelement 6, ebenfalls als Feder ausgebildet und mit einem den Grundkörper abdeckenden Betätigungshebel 11'. Dies erlaubt eine Verbesserung der Gebrauchssicherheit durch stufenlose, einfache und reproduzierbare Handhabung. Die stufenlose Entspannung mittels Kipphebel 11 ist mit einem geringen Kraftaufwand möglich. Die Spannung wird mittels Betätigungshebel 11' stufenlos aufgebaut. Die Konstruktion zeichnet sich aus durch flache Bauweise, wenige Bauteile umfassend, gewichtssparend, sowie durch eine stufenlose, bedienerfreundliche Ausführung aus.

Fig. 7 zeigt ein Ausführungsbeispiel eines Spann- und Entspannelementes in Bindungen für Ski und Snowboards.
Die dargestellte Anordnung entspricht im wesentlichen der in Fig. 6 beschriebenen mit zwei Wellen 4 und 4'. Erkennbar sind im weiteren der Grundkörper 3, die Spann- und Entspannelemente 6, 5 und die Betätigungselemente 11 und 11'. Das Zurrband 1 führt von einer ersten Befestigung am Snowboard kommend zwischen den Wellen 4, 4' hindurch in Spannrichtung mit Pfeil D, während das andere Zurrband 1' von einer zweiten Befestigung am Snowboard kommend am Grundkörper an der Stelle 19 befestigt ist. Die Spannung wird mittels Hebel 11' stufenlos aufgebaut. Die stufenlose Entspannung findet mittels Kipphebel 11 mit wenig Kraftaufwand statt.
Damit wird die Erhöhung oder Verminderung der Spannung eines Zugelementes montiert an einem Element wie Schuhe, Skischuhe, Snowboardschuhe, Snowboardbindung, Rollerbladeschuhen, zurstufenlosen Spannung oder Entspannung eingesetzt. Die Konstruktion ermöglicht eine flache Bauweise, umfasst wenige Bauteile und ist daher leicht und bedienerfreundlich.

Ein weiteres Ausführungsbeispiel eines Spann- und Entspannelementes findet sich im Wassersport, insbesondere im Segel- und Surfsport.
Dort finden Spann- und Entspannelemente Verwendung fürdie Erhöhung oder Verminderung der Spannung eines Zugelementes wie Seile montiert an einem Schiffsdeck, einer Schiffsverkleidung, einem Seil, einem Segel usw., zur stufenlosen Spannung oder Entspannung.
Die Kombination eines Spannelementes 6 zur stufenlosen Spannung oder Aufwicklung eines Auf- oder Abwickelelementes, dem Aufbau der Spannkraft eines Zurrstranges, und eines Entspannelementes 5 zur stufenlosen Entspannung oder Abwicklung eines Auf- oder Abwickelelementes, der Spannkraft eines Zurrstranges führt zur Verbesserung der Gebrauchssicherheit durch stufenlose, einfache Handhabung.

## Patentansprüche

1. Spann-/Entspannelement für eine Spann-/Entspannvorrichtung, die einen Grundkörper (3), mindestens eine am Grundkörper gelagerte und drehbare Welle (4), ein bewegliches Teil (2) und ein Zurrgut (1) umfasst, **dadurch gekennzeichnet, dass** zwischen dem Grundkörper (3) und der mindestens einen Welle (4) mindestens ein kraftschlüssiges und formschlüssiges Element (5, 6) vorgesehen ist, das die Welle (4) eng umgibt, dass das erste kraft- und formschlüssige Element (5) als Spannelement auf der einen Seite (5a) mit einem zum Grundkörper (3) beweglichen Teil (2) fest verbunden und auf der anderen Seite (5b) mit einer variablen und stufenlosen Vorspannung über ein erstes Bedienungselement (11) betätigbar ist und dass das zweite kraft- und formschlüssige Element (6) als Entspannelement auf der einen Seite (6a) mit dem Grundkörper (3) fest verbunden und auf der anderen Seite (6b) mit einer variablen und stufenlosen Vorspannung über ein zweites Bedienungselement (11') betätigbar ist, wobei die Spann-, bzw. die Entspannkraft beim Spannvorgang, bzw. Entspannvorgang kontinuierlich veränderbar ist.

2. Spann-/Entspannelement nach Anspruch 1, **dadurch gekennzeichnet, dass** das kraftschlüssige und formschlüssige Element (5, 6) als Feder ausgebildet ist, die aus mindestens einer Federwindung (5', 6') besteht.

3. Spann-/Entspannelement nach Anspruch 1, **dadurch gekennzeichnet, dass** das kraftschlüssige und formschlüssige Element (5, 6) als Faserwicklung ausgebildet ist, die aus mindestens einer Faserwindung besteht.

4. Spann-/Entspannelement nach einem der Ansprüche 1 - 3, **dadurch gekennzeichnet, dass** die kraftschlüssigen und formschlüssigen Elemente (5, 6) je symmetrisch zueinander angeordnet sind.

5. Spann-/Entspannelement nach einem der Ansprüche 1 - 4, **dadurch gekennzeichnet, dass** die kraftschlüssigen und formschlüssigen Elemente (5, 6) als gleiche Teile ausgebildet und daher austauschbar sind.

6. Spann-/Entspannelement nach Anspruch 2, **dadurch gekennzeichnet, dass** die Feder am einen Ende (5a, 6a) ein ringförmige Ausbildung, resp. ein Auge aufweist und das andere Ende (5b, 6b) senkrecht zur Tangente der Federwindung (5', 6') umgebogen und zur Aufnahme des Bedienungselementes vorgesehen ist.

7. Spann-/Entspannelement nach Anspruch 6, **dadurch gekennzeichnet, dass** die Feder im wesentlichen einen quadratischen oder rechteckigen Querschnitt aufweist.

8. Spann-/Entspannelement nach einem der Ansprüche 1 - 7, **dadurch gekennzeichnet, dass** als erstes Bedienungselement (11) ein Kipphebel oder ein Drehknopf vorgesehen ist, mit dem die stufenlose Entspannung mit geringem Kraftaufwand erfolgt.

9. Spann-/Entspannelement nach einem der Ansprüche 1 - 7, **dadurch gekennzeichnet, dass** als Bedienungselement (11') für das Spannelement (6) ein bewegliches Teil (2) vorgesehen ist, mit dem die stufenlose Spannung mit geringem Kraftaufwand erfolgt.

10. Verwendung des Spann-/Entspannelementes nach einem der Ansprüche 1 - 9 in einem Abseil-, bzw. Lastabsenkgerät.

11. Verwendung des Spann-/Entspannelementes nach einem der Ansprüche 1 - 9 in einer Spannratsche.

12. Spannratsche mit einem Spann-/Entspannelement nach einem der Ansprüche 1 - 9, umfassend einen Grundkörper (3), mindestens eine Welle (4), einen Auf- und Abwickelmechanismus, ein bewegliches Teil (2) und einen Zurrstrang (1), **dadurch gekennzeichnet, dass** mindestens je ein Spannelement (6) und ein Entspannelement (5) vorgesehen sind.

13. Spannratsche nach Anspruch 12, **dadurch gekennzeichnet, dass** zur Sicherung des Rückdrehens der Welle (4) im wesentlichen ein separates, formschlüssiges Element (7) als Sicherheitsverriegelung im gespannten Zustand vorgesehen ist.

14. Spannvorrichtung mit einem Spann-/Entspannelement nach einem der Ansprüche 1 - 9, umfassend einen Grundkörper (3), zwei Wellen (4, 4'), ein bewegliches Teil (2) und ein Zurrgut (1), **dadurch gekennzeichnet, dass** die zwei Wellen (4, 4') um das Zurrgut (1) derart angeordnet sind, dass letzteres in engem Kontakt mit beiden Wellen steht und an diesen vorbeiführt, dass auf der ersten Welle (4) mindestens ein Entspannelement (5) angebracht ist, wofür ein erstes Bedienungselement (11) zu dessen Betätigung vorgesehen ist und dass auf der zweiten Welle (4') mindestens ein Spannelement (6) angebracht ist, wofür ein zweites Bedienungselement (11') zu dessen Betätigung vorgesehen ist.

15. Verwendung der Spannvorrichtung nach Anspruch 14 in der Orthopädie und Rehabilitation.

16. Verwendung der Spannvorrichtung nach Anspruch 14 in Bindungen für Ski und Snowboards.

17. Verwendung der Spannvorrichtung nach Anspruch 14 in Sportschuhen.

18. Verwendung der Spannvorrichtung nach Anspruch 14 im Wassersport.

## Claims

1. Tensioning/relaxing element for a tensioning/relaxing device that comprises a base (3), at least one shaft (4) seated on the base on a bearing and capable of rotation, a moveable part (2), and a lashing device (1), **characterized by** the fact that between the base (3) and the one shaft (4), at least, at least one non-positive and positive element (5,6) is provided, which closely surrounds the shaft (4), that the first non-positive and positive element (5), as a tensioning element, is, on one side (5a) firmly connected with a part (2) that may be moved relative to base (3), and, on the other side (5b), may be actuated with a variable and continuous pre-stress by means of a first actuating element (11) and that the second non-positive and positive element (6) is firmly connected, on one side (6a) with the base (3), and, on the other side (6b), with a variable and continuous pre-stress by way of a second actuator (11'), such that the tensioning or relaxing force in the tensioning process or relaxing process, respectively, can be changed continuously.

2. A tensioning/relaxing element according to claim 1, **characterized by** the fact that the non-positive and positive element (5,6) is embodied as a spring that consists of at least one spring winding (5',6').

3. A tensioning/relaxing element according to claim 1, **characterized by** the fact that the non-positive and positive element (5,6) is embodied as a fiber coil that consists of at least one fiber winding.

4. A tensioning/relaxing element according to one of the claims 1-3, **characterized by** the fact that the non-positive and positive elements (5, 6) are, in each case arranged symmetrically to each other.

5. A tensioning/relaxing element according to one of the claims 1-4, **characterized by** the fact that the non-positive and positive elements (5, 6) are embodied as identical parts and are, therefore, interchangeable.

6. A tensioning/relaxing element according to claim 2, **characterized by** the fact that the spring, at one end (5a, 6a) exhibits an annular formation or eye, respectively, and the other end (5b, 6b) is bent perpendicular to the tangent of the spring winding (5',6') and is provided for the purpose of accepting an actuator.

7. A tensioning/relaxing element according to claim 6, **characterized by** the fact that the spring exhibits, a substantially square or rectangular cross-section.

8. A tensioning/relaxing element according to one of the claims 1-7, **characterized by** the fact that a tipping lever or rotating knob is provided as the first actuator (11), with which the continuous relaxation occurs with the expenditure of little energy.

9. A tensioning/relaxing element according to one of the claims 1-7, **characterized by** the fact that a moveable part (2), with which the continuous tension occurs with little expenditure of energy, is provided as an actuator (11') for the tensioning element (6).

10. The use of the tensioning/relaxing element according to one of the claims 1-9 in a rappelling or load-lowering device.

11. The use of the tensioning/relaxing element according to one of the claims 1-9 in a tension ratchet.

12. A tension ratchet with a tensioning/relaxing element according to one of the claims 1-9, comprising a base (3), at least one shaft (4), a winding-up and unwinding mechanism, a moveable part (2) and a lashing line (1), **characterized by** the fact that at least one tensioning element (6) and one relaxing element (5) each is provided.

13. A tension ratchet according to claim 12, **characterized by** the fact that in order to secure the reverse rotation of the shaft (4), a substantially separate, positive element (7) is provided as a safety lock in the taut state.

14. A tensioning device with a tensioning/relaxing element according to one of the claims 1-9, comprising a base (3), two shafts (4, 4'), a moveable part (2), and a lashing device (1), **characterized by** the fact that the two shafts (4, 4') are arranged around the lashing device (1) in such a manner that the latter stands in close contact with both shafts and goes past them, that at least one relaxing element (5), for which a first actuator (11) is provided for its actuation, is applied to the first shaft (4), and that to the second shaft (4') at least one tensioning element (6), for which a second actuator (11') is provided for its actuation, is applied.

15. The use of the tensioning device according to claim 14 in orthopedics and rehabilitation.

16. The use of the tensioning device according to claim 14 in bindings for skis and snowboards.

17. The use of the tensioning device according to claim 14 in sports shoes.

18. The use of the tensioning device according to claim 14 in water sports.

## Revendications

1. Elément pour serrer/desserrer d'un dispositif de serrage et de desserrage comprenant un corps principal (3), au moins un arbre rotatif (4) situé sur le corps principal, une partie mobile (2) et un système d'amarrage (1), **caractérisé en ce que**, entre le corps principal (3) et de l'un au moins des arbres (4) est prévu un élément d'adhérence et de forme (5,6) qui entoure étroitement l'arbre, que le premier élément d'adhérence et de forme (5) en tant qu'élément de serrage sur l'un des côtés (5a) est fortement relié à une partie mobile (2) par rapport au corps principal (3) tout en pouvant se manoeuvrer de l'autre côté (5b) avec une précontrainte variable et en continu à l'aide d'un premier élément de manoeuvre (11) et que le deuxième élément d'adhérence et de forme (6) en tant qu'élément de desserrage sur l'un des côtés (6a) est fortement relié au corps principal (3) tout en pouvant se manoeuvrer de l'autre côté (6b) avec une précontrainte variable et en continu à l'aide d'un deuxième élément de manoeuvre (11') où la force de serrage ou de desserrage peut être continuellement modifiée au moment de procéder au serrage ou au desserrage.

2. Elément pour serrer/desserrer selon la revendication 1, **caractérisé en ce que** l'élément d'adhérence et de forme (5,6) est un ressort comprenant au moins une spire (5', 6').

3. Elément pour serrer/desserrer selon la revendication 1, **caractérisé en ce que** l'élément d'adhérence et de forme (5,6) est une bobine de fibres comprenant au moins une spire.

4. Elément pour serrer/desserrer selon la revendication 1-3, **caractérisé en ce que** les éléments d'adhérence et de forme (5,6) sont rangés de manière symétrique l'un par rapport à l'autre.

5. Elément pour serrer/desserrer selon la revendication 1-4, **caractérisé en ce que** les éléments d'adhérence et de forme (5, 6) constituent deux parties égales ce qui les rend interchangeables.

6. Elément pour serrer/desserrer selon la revendication 2, **caractérisé en ce que** le ressort à l'un de ses bouts (5a, 6a) présente une forme annulaire ou un oeilleton et que l'autre bout (5b, 6b) est recourbé à la verticale par rapport à la tangente de la spire du ressort (5', 6') pour permettre la réception de l'élément de commande.

7. Elément pour serrer/desserrer selon la revendication 6, **caractérisé en ce que** le ressort présente pour l'essentiel une section transversale carrée ou rectangulaire.

8. Elément pour serrer/desserrer selon l'une des revendication 1-7, **caractérisé en ce que** le premier élément de commande (11) est un levier à bascule ou un bouton tournant permettant un desserrage en continu avec une dépense en force minime.

9. Elément pour serrer/desserrer selon l'une des revendications 1-7, **caractérisé en ce qu'**il est prévu comme élément de command (11') pour l'élément de serrage (6) une partie mobile (2) permettant un serrage en continu avec une dépense en force minime.

10. Utilisation de l'élément de serrage et de desserrage selon l'une des revendications 1-9 dans un dispositif de corde de rappel ou de câble de monte-charge.

11. Utilisation de l'élément de serrage et de desserrage selon l'une des revendications 1-9 dans un cliquet de serrage ou tendeur à cliquet.

12. Cliquet de serrage avec un élément de serrage et de desserrage selon l'une des revendications 1-9, comprenant un corps principal (3), au moins un arbre d'enroulement (4), un mécanisme d'enroulement et de déroulement, une partie mobile (2) et une corde d'amarrage (1), **caractérisé en ce qu'**il soit prévu au moins un élément de serrage (6) et un élément de desserrage (5).

13. Cliquet de serrage selon la revendication 12, **caractérisé en ce que** pour assurer le retour de l'arbre d'enroulement (4) il est prévu pour l'essentiel un élément de forme séparé (7) pour servir de système de verrouillage en situation de serrage.

14. Dispositif de serrage avec un élément de serrage et de desserrage selon l'une des revendications 1-9, comprenant un corps principal (3), deux arbres d'enroulement (4,4'), une partie mobile (2) et une corde d'amarrage (1), qui est **caractérisé en ce que** les deux arbres (4,4') sont disposés autour de la corde d'amarrage (1) de telle sorte, que cette dernière soit en contact étroit avec les deux arbres tout en passant tout près d'eux, que sur le premier arbre (4) il y ait au moins un élément de desserrage (5) pour lequel est prévu un premier élément de commande (11) et que sur le deuxième arbre (4') il y ait au moins un élément de serrage (6), pour lequel est prévu un deuxième élément de commande (11') permettant de le manoeuvrer.

15. Utilisation du dispositif de serrage et de desserrage selon la revendication 14 en orthopédie et en réhabilitation.

16. Utilisation du dispositif de serrage et de desserrage selon la revendication 14 dans les fixations de ski et de snowboard.

17. Utilisation du dispositif de serrage et de desserrage selon la revendication 14 pour les souliers de sport.

18. Utilisation du dispositif de serrage et de desserrage selon la revendication 14 pour le sport aquatique.
